# EUROPEAN PATENT APPLICATION

(11) **EP 3 404 582 A1**
(43) Date of publication of application: **21.11.2018**
(21) Application number: 18170902.3
(22) Date of filing: 04.05.2018
(51) Int. Cl.: G06K 9/46, G06K 9/62

(54) **TRAINING AN RGB-D CLASSIFIER WITH ONLY DEPTH DATA AND PRIVILEGED INFORMATION**

(30) Priority: 15.05.2017 US 201762506128 P; 05.07.2017 US 201762528690 P; 29.09.2017 US 201715719762
(71) Applicant: Siemens Aktiengesellschaft, 80333 München (DE)
(72) Inventor: PENG, Kuan-Chuan, Plainsboro, NJ New Jersey 08536 (US); WU, Ziyan, Princeton, NJ New Jersey 08540 (US); ERNST, Jan, Plainsboro, NJ New Jersey 08536 (US)
(74) Representative: Isarpatent

(57) **Abstract**

Embodiments of the present invention provide a computer-implemented method for training an RGB-D classifier for a scene classification task. The method receives task-relevant labeled depth data, task-irrelevant RGB-D data, and a given trained representation in RGB. The method simulates an RGB representation using only the task-irrelevant RGB-D data. The method builds a joint neural network using only the task-irrelevant RGB-D data and the task-relevant labeled depth data.

## Description

### BACKGROUND

The present invention generally relates to machine learning systems, and more specifically, to training an RGB-D classifier for scene classification based on use of only depth and privileged data.

Information that is useful to solve practical tasks often exists in different domains, in which the information is captured by various sensors. As used herein, a "domain" can refer to either a modality or a dataset. For example, in one scenario, a 3-D layout of a room can be captured by a depth sensor or inferred from RGB images. In real-world scenarios, however, access to data from certain domains(s) is often limited.

### SUMMARY

Embodiments of the present invention provide a computer-implemented method for training an RGB-D classifier for a scene classification task. A non-limiting example method includes receiving task-relevant labeled depth data, task-irrelevant RGB-D data, and a given trained representation in RGB. The task-relevant labeled depth data includes a plurality of task-relevant depth images. The task-irrelevant RGB-D data includes a plurality of task-irrelevant RGB-D image pairs, in which each RGB-D image pair of the task-irrelevant RGB-D data comprises a task-irrelevant RGB image and a task-irrelevant depth image. The method simulates an RGB representation using only the task-irrelevant RGB-D data. The method builds a joint neural network using only the task-irrelevant RGB-D data and the task-relevant labeled depth data.

Embodiments of the present invention provide a system for training an RGB-D classifier for a scene classification task. The system includes one or more processors configured to perform a method. A non-limiting example method includes receiving task-relevant labeled depth data, task-irrelevant RGB-D data, and a given trained representation in RGB. The task-relevant labeled depth data includes a plurality of task-relevant depth images. The task-irrelevant RGB-D data includes a plurality of task-irrelevant RGB-D image pairs, in which each RGB-D image pair of the task-irrelevant RGB-D data comprises a task-irrelevant RGB image and a task-irrelevant depth image. The method simulates an RGB representation using only the task-irrelevant RGB-D data. The method builds a joint neural network using only the task-irrelevant RGB-D data and the task-relevant labeled depth data.

Embodiments of the invention provide a computer program product for training an RGB-D classifier for a scene classification task, the computer program product comprising a computer readable storage medium having program instructions embodied therewith. The program instructions are executable by system operatively coupled to one or more processors to cause the system to perform a method. A non-limiting example method includes receiving task-relevant labeled depth data, task-irrelevant RGB-D data, and a given trained representation in RGB. The task-relevant labeled depth data includes a plurality of task-relevant depth images. The task-irrelevant RGB-D data includes a plurality of task-irrelevant RGB-D image pairs, in which each RGB-D image pair of the task-irrelevant RGB-D data comprises a task-irrelevant RGB image and a task-irrelevant depth image. The method simulates an RGB representation using only the task-irrelevant RGB-D data. The method builds a joint neural network using only the task-irrelevant RGB-D data and the task-relevant labeled depth data.

Additional technical features and benefits are realized through the techniques of the present invention. Embodiments and aspects of the invention are described in detail herein and are considered a part of the claimed subject matter. For a better understanding, refer to the detailed description and to the drawings.

### BRIEF DESCRIPTION OF THE SEVERAL VIEWS OF THE DRAWINGS

The specifics of the exclusive rights described herein are particularly pointed out and distinctly claimed in the claims at the conclusion of the specification. The foregoing and other features and advantages of the embodiments of the invention are apparent from the following detailed description taken in conjunction with the accompanying drawings in which:
FIG. 1 depicts an example system that facilitates machine learning in accordance with one or more embodiments of the present invention;
FIG. 2 depicts a flow diagram illustrating an example training procedure for a scene classification task in accordance with one or more embodiments of the present invention;
FIG. 3 depicts a flow diagram illustrating an example testing procedure for testing target-domain data in accordance with one or more embodiments of the present invention;
FIG. 4 depicts a flow diagram illustrating an example testing procedure for testing domain fusion in accordance with one or more embodiments of the present invention;
FIG. 5 depicts a flow diagram illustrating an example methodology in accordance with one or more embodiments of the present invention;
FIG. 6 depicts a cloud computing environment according to one or more embodiments of the present invention;
FIG. 7 depicts abstraction model layers according to one or more embodiments of the present invention; and
FIG. 8 depicts an exemplary computer system capable of implementing one or more embodiments of the present invention.

The diagrams depicted herein are illustrative. There can be many variations to the diagram or the operations described therein without departing from the spirit of the invention. For instance, the actions can be performed in a differing order or actions can be added, deleted or modified. Also, the term "coupled" and variations thereof describes having a communications path between two elements and does not imply a direct connection between the elements with no intervening elements/connections between them. All of these variations are considered a part of the specification.

In the accompanying figures and following detailed description of the disclosed embodiments, the various elements illustrated in the figures are provided with two or three digit reference numbers. With minor exceptions, the leftmost digit(s) of each reference number correspond to the figure in which its element is first illustrated.

### DETAILED DESCRIPTION

Various embodiments of the invention are described herein with reference to the related drawings. Alternative embodiments of the invention can be devised without departing from the scope of this invention. Various connections and positional relationships (e.g., over, below, adjacent, etc.) are set forth between elements in the following description and in the drawings. These connections and/or positional relationships, unless specified otherwise, can be direct or indirect, and the present invention is not intended to be limiting in this respect. Accordingly, a coupling of entities can refer to either a direct or an indirect coupling, and a positional relationship between entities can be a direct or indirect positional relationship. Moreover, the various tasks and process steps described herein can be incorporated into a more comprehensive procedure or process having additional steps or functionality not described in detail herein.

The following definitions and abbreviations are to be used for the interpretation of the claims and the specification. As used herein, the terms "comprises," "comprising," "includes," "including," "has," "having," "contains" or "containing," or any other variation thereof, are intended to cover a non-exclusive inclusion. For example, a composition, a mixture, a process, a method, an article, or an apparatus that comprises a list of elements is not necessarily limited to only those elements but can include other elements not expressly listed or inherent to such composition, mixture, process, method, article, or apparatus.

Additionally, the term "exemplary" is used herein to mean "serving as an example, instance or illustration." Any embodiment or design described herein as "exemplary" is not necessarily to be construed as preferred or advantageous over other embodiments or designs. The terms "at least one" and "one or more" may be understood to include any integer number greater than or equal to one, i.e. one, two, three, four, etc. The terms "a plurality" may be understood to include any integer number greater than or equal to two, i.e. two, three, four, five, etc. The term "connection" may include both an indirect "connection" and a direct "connection."

The terms "about," "substantially," "approximately," and variations thereof, are intended to include the degree of error associated with measurement of the particular quantity based upon the equipment available at the time of filing the application. For example, "about" can include a range of ± 8% or 5%, or 2% of a given value.

For the sake of brevity, conventional techniques related to making and using aspects of the invention may or may not be described in detail herein. In particular, various aspects of computing systems and specific computer programs to implement the various technical features described herein are well known. Accordingly, in the interest of brevity, many conventional implementation details are only mentioned briefly herein or are omitted entirely without providing the well-known system and/or process details.

As noted above, in real-world scenarios however, access to data from certain domains(s) is often limited. One of the main challenges faced by domain adaptation is identifying how knowledge learned from a given set of data can be applicable to other domains in which a source domain, a target domain, and a task of interest (TOI) are given. A natural extension of the end product of domain adaptation is domain fusion. One objective of domain fusion is to obtain a dual-domain (source and target) task solver which is robust to noise in either domain.

Some known approaches in domain adaptation and fusion have shown promising results with either labeled or unlabeled task-relevant target-domain training data. For example, some existing domain adaptation methods assume that the task-relevant data (*e.g.,* the data that is directly applicable and related to the TOI), in the target domain, is available at training time, which is not always true in practice. For example, acquiring a depth image inside a small delicate component may be infeasible in certain instances as a result of an unstable tool at hand and/or a limited amount of time or budget. This assumption is also true for existing works of domain fusion.

One or more embodiments of the present invention address one or more of the problems identified above by providing a domain adaptation and fusion approach which learns the task-irrelevant dual-domain training pairs without using the task-relevant target-domain training data. As used herein, the term "task-irrelevant data" is used to refer to data which is not task relevant. For example, when applying a 3-scene classification task that that is configured to identify computer room, conference room, and corridor images, images that show a bedroom, bathroom, and basement would be task-irrelevant.

In general, as will be described in further detail below, in some embodiments of the present invention, the method learns a source-domain representation that is suitable for both a given TOI and a given general target-domain representation. In some embodiments of the present invention, the method then performs domain fusion by simulating the task-relevant target-domain representation with the task-relevant source-domain data. Embodiments of the present invention can be applied to various types of tasks of interest. For example, in some embodiments of the present invention, the method is applied for a scene classification task for an RGB-D dataset, such as a SUN RGB-D dataset.

In particular, given a TOI, a source domain *Dₛ,* and a target domain *Dₜ,* one or more embodiments of the present invention are designed to achieve a domain adaptation goal and/or a domain fusion goal. In some embodiments of the present invention, the domain adaption goal includes solving the given TOI for both the source domain *Dₛ,* and a target domain *Dₜ* when the task-relevant data in *Dₜ* is unavailable at training time. For example, applying domain adaptation via a method that has access to the following at training time: (a) the task-relevant labeled data in *Dₛ;* (b) the task-irrelevant dual-domain pairs in *Dₛ,* and *Dₜ,* and (c) a reasonably good, off-the-shelf, and task-irrelevant trained presentation in *Dₜ.* In some embodiments of the present invention, the domain fusion goal includes solving the given TOI when the testing data in both *Dₛ,* and *Dₜ* is available, in which the testing data in either *Dₛ,* and *Dₜ* can be noisy. At testing time, the method does not have prior knowledge available about the type of noise and knowledge regarding which domain provided the noisy data.

In the examples described below, one or more methods are described as being employed for a scene classification task, in which the source/target domain is depth/RGB images and in which the task-irrelevant RGB-D pair have different labels from the task-relevant labels. However, it should be understood that the method(s) may be extended to other TOIs and/or other domains and not just scene classification for RGB or RGB-D data.

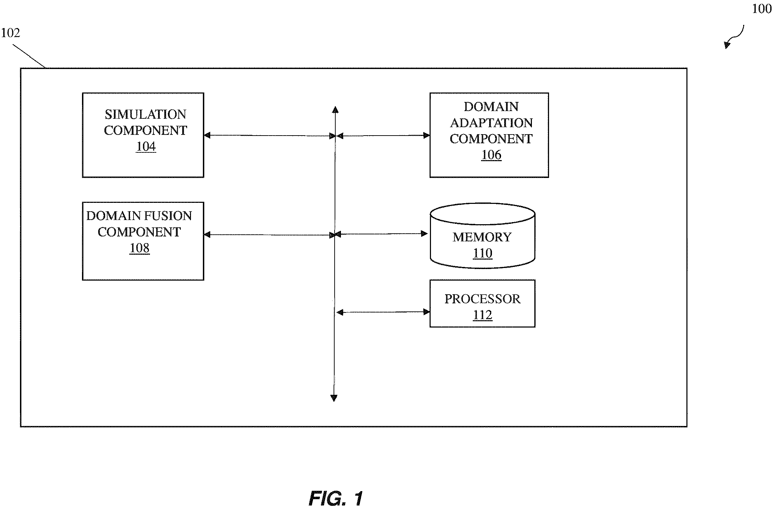

FIG. 1 illustrates a block diagram of an example, non-limiting system 100 that facilitates machine learning in accordance with one or more embodiments of the present invention. System 100 is a machine learning system that can be utilized to solve a variety of technical issues (e.g., learning previously unknown functional relationships) in connection with technologies such as, but not limited to, machine learning technologies, time-series data technologies, data analysis technologies, data classification technologies, data clustering technologies, trajectory/journey analysis technologies, medical device technologies, collaborative filtering technologies, recommendation system technologies, signal processing technologies, word embedding technologies, topic model technologies, image processing technologies, video processing technologies, audio processing technologies, and/or other digital technologies. System 100 employs hardware and/or software to solve problems that are highly technical in nature, that are not abstract and that cannot be performed as a set of mental acts by a human.

In certain embodiments of the invention, some or all of the processes performed by system 100 are performed by one or more specialized computers (e.g., one or more specialized processing units, a specialized computer with a domain adaptation and fusion component, etc.) for carrying out defined tasks related to machine learning. In some embodiments of the invention, system 100 and/or components of the system are employed to solve new problems that arise through advancements in technologies mentioned above, employment of image data, machine learning process, and/or computer architecture, and the like. In one or more embodiments of the invention, the system 100 provides the above-described technical improvements to machine learning systems, artificial intelligence systems, data analysis systems, data analytics systems, data classification systems, data clustering systems, trajectory/journey analysis systems, medical device systems, collaborative filtering systems, recommendation systems, signal processing systems, word embedding systems, topic model systems, image processing systems, video processing systems, and/or other digital systems. In one or more embodiments of the invention, the system 100 also provide technical improvements to a central processing unit associated with a machine learning process by improving processing performance of the central processing unit, reducing computing bottlenecks of the central processing unit, improving processing efficiency of the central processing unit, and/or reducing an amount of time for the central processing unit to perform the machine learning process.

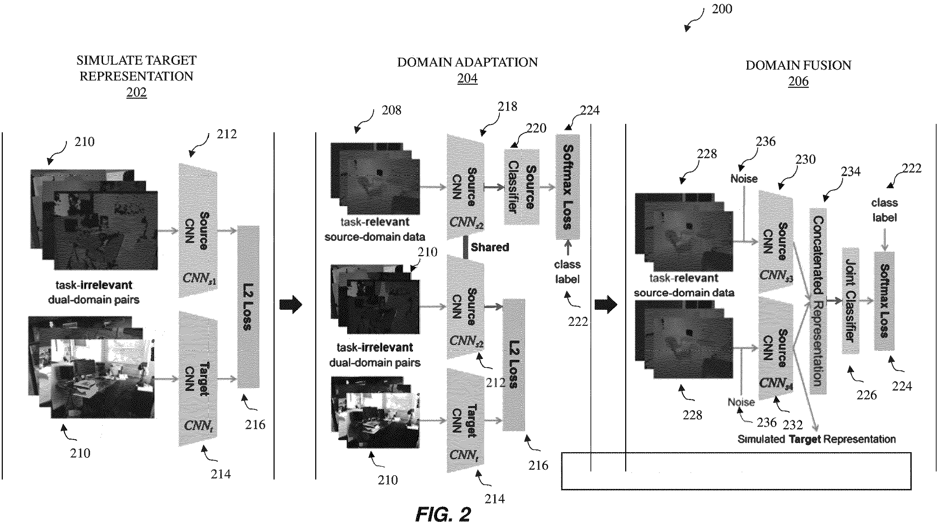

In FIG. 1, system 100 includes a domain adaptation and fusion component 102, which is configured to perform one or more processes, such as the ones described below in reference to FIGS. 2-5. In this example, the domain adaptation and fusion component 102 includes a simulation component 104, a domain adaptation component 106, and a domain fusion comment 108. In some embodiments of the invention, the domain adaptation and fusion component 102 constitutes machine-executable component(s) embodied within machine(s), (*e.g*., embodied in one or more computer readable mediums (or media) associated with one or more machines). Such component(s), when executed by the one or more machines, (*e.g*., computer(s), computing device(s), virtual machine(s), etc.) cause the machine(s) to perform the operations described. In some embodiments of the invention, the domain adaptation and fusion component 102 includes memory 110 that stores computer executable components and instructions. Furthermore, the domain adaptation and fusion component in some embodiments of the invention includes a processor 112 to facilitate execution of the instructions (*e.g*., computer executable components and corresponding instructions) by domain adaptation and fusion component 102. As shown, 104, a domain adaptation component 106, and a domain fusion comment 108, memory 110, and/or processor 112 are electrically and/or communicatively coupled to one another in one or more embodiments of the invention.

FIG. 2 depicts a flow diagram illustrating an overview of an example training procedure 200 for a scene classification task, in accordance with one or more embodiments of the present invention. In this example, *Dₛ,* and *Dₜ* are depth and RGB images respectively for the scene classification task. At training time the method has access to task-relevant labeled depth data (*i.e.* task-relevant source-domain data 208), task-irrelevant RGB-D image pairs (*i.e*., task-irrelevant dual-domain pairs 210), and a given trained representation in RGB (not shown). At 202, an RGB representation (*e.g*., target representation) is simulated. At 204, domain adaptation is performed by building a joint network with the supervision of the TOI in depth (*e.g*., supervision from the source domain). At 206 domain fusion in performed by training a domain fusion network.

At 202, two convolution neural networks (CNN) (*i.e., CNN*ₛ₁ 212 and *CNN*ₜ 214) are created to handle the depth and RGB images of the task-irrelevant RGB-D pairs 210. In particular at 202, *CNN*ₛ₁ 212 is trained such that the method can simulate the representation of an RGB image by feeding the corresponding depth image into *CNN*ₛ₁ 212. In some embodiments of the present invention, this is achieved by fixing *CNN*ₜ 214 using an off-the-shelf good representation in RGB, and enforcing the L2 loss 216 on top of *CNN*ₛ₁ 212 and *CNN*ₜ 214 at training time. The L2 loss can be replaced with any suitable loss function that encourages the similarity of the two input representations.

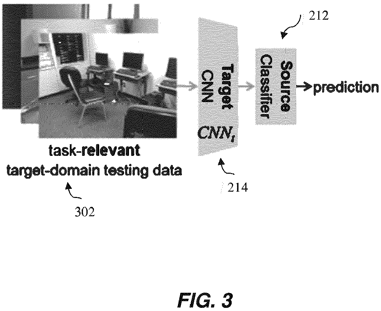

At 204, another CNN (*i.e., CNN*ₛ₂ 218) and a classifier (*i.e*., source classifier 220) is added to the network to learn from the label of the scene classification in the depth data (*i.e.,* class label 222). The newly added CNN (*i.e., CNN*ₛ₂ 218) takes the task-relevant depth images as input, and shares all the weights with the original source CNN (*i.e., CNN*ₛ₁ 212). *CNN*ₛ₂ 218 has the same network architecture as that of *CNN*ₛ₁ 212. As such, the added CNN (*i.e., CNN*ₛ₂ 218) and the original source CNN (*i.e., CNN*ₛ₁ 212) are both referred to as *CNN*ₛ₂ 218 at 204 in FIG. 2. At training time, the *CNN*ₛ₂ 218 is pre-trained from *CNN*ₛ₁ 212 and the *CNN*ₜ 214 is fixed. The *CNN*ₛ₂ 218 and the source classifier 220 are trained such that the weighted sum of the softmax loss 224 and the L2 loss 216 are minimized. The softmax loss can be replaced with any suitable loss function for the given TOI. After training, a depth representation can be obtained which is close enough to the given RGB representation and performs reasonably well with the trained classifier in the scene classification. Although steps 202 and 204 are shown as distinct steps, both steps can be combined into a single step such as via curriculum learning. After the domain adaption is accomplished at 202, the scene classifier in RGB/depth (*C_{RGB}*/*C_{D}*) is formed by combining *CNNₜ* 214/ *CNN*ₛ₂ 218 and the trained source classifier as shown in FIG. 3. In some embodiments this includes testing of task-relevant target-domain testing data 302 using the trained classifier and network.

Referring back to FIG. 2, at 206 a joint classifier 226 is trained for RGB-D input using only task-relevant training data in depth (*i.e*., task-relevant source-domain data 228). In particular, at 206 two CNNs are created (*i.e., CNN*ₛ₃ 230 and *CNN*ₛ₄ 232), in which *CNN*ₛ₃ 230 and *CNN*ₛ₄ 232 have the same network architecture as that of *CNN*ₛ₁ 212. A concatenation layer is added on top of both the *CNN*ₛ₃ 230 and the *CNN*ₛ₄ 232 to concatenate their respective output representations into a concatenated representation 234. The concatenated representations 234 is connected to the joint classifier 226. At training time, *CNN*ₛ₃ 230 and *CNN*ₛ₄ 232 are pre-trained from *CNN*ₛ₂ 218 and *CNN*ₛ₁ 212 respectively, and *CNN*ₛ₄ 232 is fixed. Both *CNN*ₛ₃ 230 and *CNN*ₛ₄ 232 take the task-relevant depth images as the input.

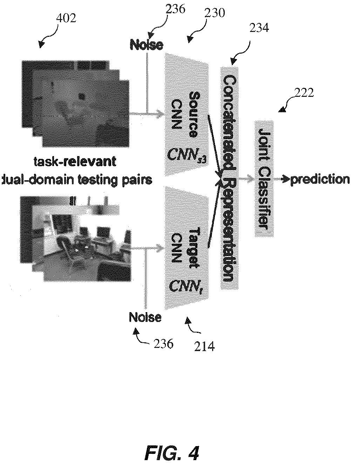

In some embodiments of the present invention, an RGB-D scene classifier is trained by randomly selecting a subset of inputs of *CNN*ₛ₃ 230 and *CNN*ₛ₄ 232, and optionally adding noise 236 to each independently. The entire network is then supervised with the label of the scene classification in the depth data, which can be done by the softmax loss 224 enforced on top of the joint classifier 226. As the output of *CNN*ₛ₄ 232 is expected to simulate the RGB representation, at step 204 *CNN*ₛ₃ 230 is trained based on the simulated RGB representation to learn a depth representation that is suitable for RGB-D scene classification. The training of the *CNN*ₛ₃ 230 is performed without the constraint of the L2 loss 216. As shown in FIG. 4, at testing time, *CNN*ₛ₄ 232 is replaced with *CNNₜ* 214 which takes task-relevant RGB testing images 402 as input, with optional noise added, to test the robustness of the RGB-D scene classifier. After performing training procedure 200, the method can solve the scene classification in RGB, depth, and RGB-D domain, in which the trained RGB-D classifier is be able to handle noisy input with reasonable performance degradation.

The example training process 200 can be implemented using various types of technology. For example, in some embodiments of the present invention Caffe is used to implement the method. In some embodiments of the present invention, GoogleNet is used as the network architecture for the CNNs (*i.e, CNN*ₛ₁ 212, *CNNₜ* 214, *CNN*ₛ₂ 218, *CNN*ₛ₃ 230, and *CNN*ₛ₄ 232). In some embodiments of the present invention, the source classifier 220 and the joint classifier 226 are both a fully connected layer comprising a number of output nodes. In some embodiments of the present invention, the number of output nodes is set to be the number of scenes in the scene classification task. In some embodiments of the present invention, *CNN*ₛ₁ 212 is pre-trained using a BVLC GoogleNet Model, in which the BVLC GoogleNet Model is trained for an ImageNet classification task. In some embodiments of the present invention, noise 236 is added via the use of an "all black" noise model to model the extreme case that none of the pixels in the noisy image are available. In some embodiments of the present invention, augmented training data is formed at 206 by copying the original task-relevant training data a number of times and replaying a percentage of the images that are selected randomly with a black image. For example, in some embodiments of the present invention, the augmented training data is formed by copying the original task-relevant depth training data 10 times and replacing *pₜᵣₐᵢₙ* % of the original testing images that are selected randomly with the black image.

Various suitable training parameters may be implemented as part of training process 200. For example, in some embodiments of the present invention, a batch size and fixed learning rate are utilized as training parameters. In some embodiments of the present invention, a batch size of 32 is used and fixed learning rates of 10⁻⁵ , 10⁻⁶, and 10⁻³ are used respectively for step 202, step 204, and step 206. The learning rate is chosen such that the training network can converge under a reasonable amount of time. In some embodiments of the present invention, the weight of the softmax loss and the L2 loss in step 204 is set to 10³ and 1 respectively. In some embodiments of the present invention, steps 202, 204, and 206 are trained for 10⁴/10³/10³ iterations. In some embodiments of the present invention, default values are used for other training parameters when used in training the BLC GoogleNet model for the ImageNet classification task.

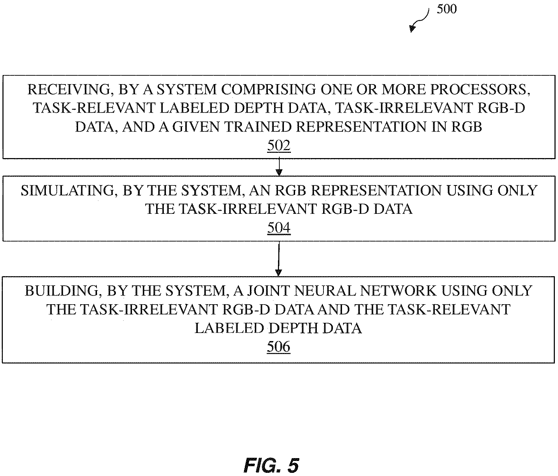

Additional details of the operation of system 100 will now be described with reference to FIG. 5, wherein FIG. 5 depicts a flow diagram illustrating a methodology 500 according to one or more embodiments of the present invention. At 502, task-relevant labeled depth data, task-irrelevant RGB-D data, and a given trained representation in RGB are received. The task-relevant labeled depth data includes a plurality of task-relevant depth images. The task-irrelevant RGB-D data includes a plurality of task-irrelevant RGB-D image pairs, in which each RGB-D image pair of the task-irrelevant RGB-D data comprises a task-irrelevant RGB image and a task-irrelevant depth image. At 504, an RGB representation is simulated using only the task-irrelevant RGB-D data (*e.g.,* by simulation component 104). At 506, a joint neural network is built using only the task-irrelevant RGB-D data and the task-relevant labeled depth data (*e.g.,* by simulation component 106).

In some embodiments of the present invention, the RGB representation is simulated by at least creating a first convolutional neural network to handle depth images of the task-irrelevant RGB-D data, thus creating a second convolutional neural network to handle RGB images of the task-irrelevant RGB-D data and training the first convolution neural network. In some embodiments of the present invention, the first convolution neural network is trained by at least fixing the second convolution neural network using the given trained representation in RGB and enforcing an L2 loss function on the first and second convolution neural networks.

In some embodiments of the present invention, the joint neural network is built by at least creating a third convolution neural network and an RGB classifier to learn from a label of a scene classification of the task-relevant labeled depth data, and training the second convolution neural network and the RGB classifier such that a weighted sum of a softmax loss and the L2 loss are minimized. In some embodiments of the present invention, the third convolution neural network is configured to receive depth images of the task-relevant labeled depth data and to share all weights with the first convolution neural network. In some embodiments of the present invention, the training of the second convolution neural network includes pre-training the third convolution neural network from the first convolution neural network and fixing the second convolution neural network using the given trained representation in RGB.

In some embodiments of the present invention, methodology 500 further or alternatively includes receiving and testing task-relevant RGB data, in which the task-relevant RGB data includes a plurality of task-relevant RGB images. In some embodiments of the present invention, the testing includes forming a scene classifier in RGB/depth, in which the forming of the scene classifier includes combining the second and third convolution neural networks and the trained RGB classifier.

In some embodiments of the present invention, methodology 500 further or alternatively includes training a domain fusion network using only the task-relevant labeled depth data to train a joint classifier for an RGB-D input. In some embodiments of the present invention, the training of the domain fusion network includes creating a fourth and fifth convolution neural network, adding a concatenation layer to the fourth and fifth convolution network, and training the fourth convolution neural network to learn a depth representation for RGB-D scene classification without constraint of the L2 loss. The fourth and fifth convolution neural network handle depth images of the task-relevant labeled depth data. The concatenation layer is configured to generate a concatenated representation by concatenating output representations of the fourth and five convolution networks, in which the concatenated representation is connected to the joint classifier.

In some embodiments of the present invention, the training of the fourth convolution neural network includes pre-training the fourth from the third convolutional neural network, pre-training the fifth convolution neural network from the first convolution neural network, fixing the fifth convolution neural network based at least in part on the simulated RGB representation, and enforcing the softmax loss on the joint classifier.

In some embodiments of the present invention, methodology 500 further or alternatively includes receiving and testing task-relevant RGB-D image data, in which the task-relevant RGB-D data includes a plurality of task-relevant RGB-D image pairs, each comprising a task-relevant RGB image and a task-relevant depth. In some embodiments of the present invention, the testing of the task-relevant RGB-D image is performed by forming an RGB-D scene classifier. In some embodiments of the present invention, the testing includes replacing the fifth convolution neural network with the second convolution neural network.

It is to be understood that although this disclosure includes a detailed description on cloud computing, implementation of the teachings recited herein are not limited to a cloud computing environment. Rather, embodiments of the present invention are capable of being implemented in conjunction with any other type of computing environment now known or later developed.

Cloud computing is a model of service delivery for enabling convenient, on-demand network access to a shared pool of configurable computing resources (e.g., networks, network bandwidth, servers, processing, memory, storage, applications, virtual machines, and services) that can be rapidly provisioned and released with minimal management effort or interaction with a provider of the service. This cloud model may include at least five characteristics, at least three service models, and at least four deployment models.

Characteristics are as follows:
On-demand self-service: a cloud consumer can unilaterally provision computing capabilities, such as server time and network storage, as needed automatically without requiring human interaction with the service's provider.

Broad network access: capabilities are available over a network and accessed through standard mechanisms that promote use by heterogeneous thin or thick client platforms (e.g., mobile phones, laptops, and PDAs).

Resource pooling: the provider's computing resources are pooled to serve multiple consumers using a multi-tenant model, with different physical and virtual resources dynamically assigned and reassigned according to demand. There is a sense of location independence in that the consumer generally has no control or knowledge over the exact location of the provided resources but may be able to specify location at a higher level of abstraction (e.g., country, state, or datacenter).

Rapid elasticity: capabilities can be rapidly and elastically provisioned, in some cases automatically, to quickly scale out and rapidly released to quickly scale in. To the consumer, the capabilities available for provisioning often appear to be unlimited and can be purchased in any quantity at any time.

Measured service: cloud systems automatically control and optimize resource use by leveraging a metering capability at some level of abstraction appropriate to the type of service (e.g., storage, processing, bandwidth, and active user accounts). Resource usage can be monitored, controlled, and reported, providing transparency for both the provider and consumer of the utilized service.

Service Models are as follows:
Software as a Service (SaaS): the capability provided to the consumer is to use the provider's applications running on a cloud infrastructure. The applications are accessible from various client devices through a thin client interface such as a web browser (e.g., web-based e-mail). The consumer does not manage or control the underlying cloud infrastructure including network, servers, operating systems, storage, or even individual application capabilities, with the possible exception of limited user-specific application configuration settings.

Platform as a Service (PaaS): the capability provided to the consumer is to deploy onto the cloud infrastructure consumer-created or acquired applications created using programming languages and tools supported by the provider. The consumer does not manage or control the underlying cloud infrastructure including networks, servers, operating systems, or storage, but has control over the deployed applications and possibly application hosting environment configurations.

Infrastructure as a Service (IaaS): the capability provided to the consumer is to provision processing, storage, networks, and other fundamental computing resources where the consumer is able to deploy and run arbitrary software, which can include operating systems and applications. The consumer does not manage or control the underlying cloud infrastructure but has control over operating systems, storage, deployed applications, and possibly limited control of select networking components (e.g., host firewalls).

Deployment Models are as follows:
Private cloud: the cloud infrastructure is operated solely for an organization. It may be managed by the organization or a third party and may exist on-premises or off-premises.

Community cloud: the cloud infrastructure is shared by several organizations and supports a specific community that has shared concerns (e.g., mission, security requirements, policy, and compliance considerations). It may be managed by the organizations or a third party and may exist on-premises or off-premises.

Public cloud: the cloud infrastructure is made available to the general public or a large industry group and is owned by an organization selling cloud services.

Hybrid cloud: the cloud infrastructure is a composition of two or more clouds (private, community, or public) that remain unique entities but are bound together by standardized or proprietary technology that enables data and application portability (e.g., cloud bursting for load-balancing between clouds).

A cloud computing environment is service oriented with a focus on statelessness, low coupling, modularity, and semantic interoperability. At the heart of cloud computing is an infrastructure that includes a network of interconnected nodes.

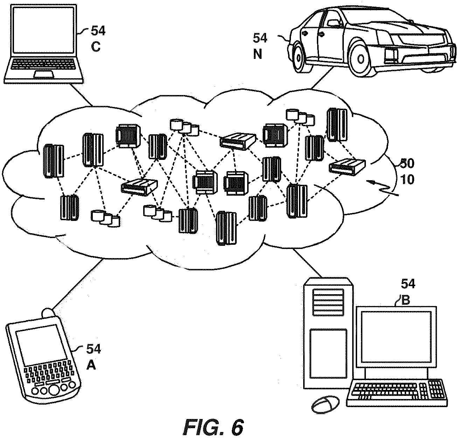

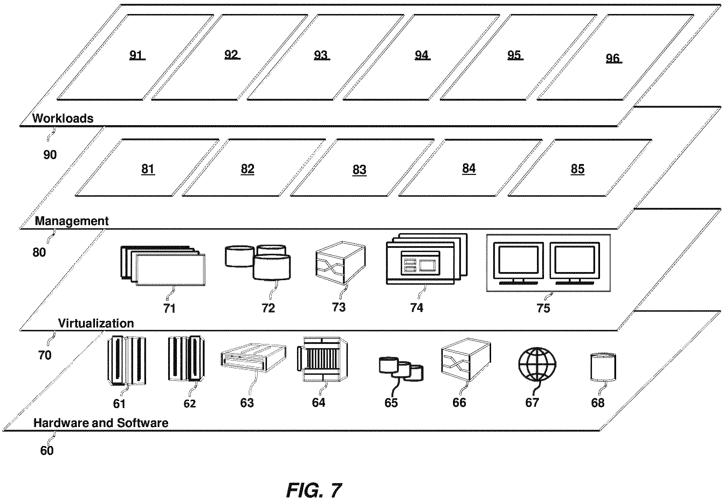

Referring now to FIG. 6, illustrative cloud computing environment 50 is depicted. As shown, cloud computing environment 50 includes one or more cloud computing nodes 10 with which local computing devices used by cloud consumers, such as, for example, personal digital assistant (PDA) or cellular telephone 54A, desktop computer 54B, laptop computer 54C, and/or automobile computer system 54N may communicate. Nodes 10 may communicate with one another. They may be grouped (not shown) physically or virtually, in one or more networks, such as Private, Community, Public, or Hybrid clouds as described hereinabove, or a combination thereof. This allows cloud computing environment 50 to offer infrastructure, platforms and/or software as services for which a cloud consumer does not need to maintain resources on a local computing device. It is understood that the types of computing devices 54A-N shown in FIG. 7 are intended to be illustrative only and that computing nodes 10 and cloud computing environment 50 can communicate with any type of computerized device over any type of network and/or network addressable connection (e.g., using a web browser).

Referring now to FIG. 7, a set of functional abstraction layers provided by cloud computing environment 50 (FIG. 6) is shown. It should be understood in advance that the components, layers, and functions shown in FIG. 7 are intended to be illustrative only and embodiments of the invention are not limited thereto. As depicted, the following layers and corresponding functions are provided:

Hardware and software layer 60 includes hardware and software components. Examples of hardware components include: mainframes 61; RISC (Reduced Instruction Set Computer) architecture based servers 62; servers 63; blade servers 64; storage devices 65; and networks and networking components 66. In some embodiments, software components include network application server software 67 and database software 68.

Virtualization layer 70 provides an abstraction layer from which the following examples of virtual entities may be provided: virtual servers 71; virtual storage 72; virtual networks 73, including virtual private networks; virtual applications and operating systems 74; and virtual clients 75.

In one example, management layer 80 may provide the functions described below. Resource provisioning 81 provides dynamic procurement of computing resources and other resources that are utilized to perform tasks within the cloud computing environment. Metering and Pricing 82 provide cost tracking as resources are utilized within the cloud computing environment, and billing or invoicing for consumption of these resources. In one example, these resources may include application software licenses. Security provides identity verification for cloud consumers and tasks, as well as protection for data and other resources. User portal 83 provides access to the cloud computing environment for consumers and system administrators. Service level management 84 provides cloud computing resource allocation and management such that required service levels are met. Service Level Agreement (SLA) planning and fulfillment 85 provide pre-arrangement for, and procurement of, cloud computing resources for which a future requirement is anticipated in accordance with an SLA.

Workloads layer 90 provides examples of functionality for which the cloud computing environment may be utilized. Examples of workloads and functions which may be provided from this layer include: mapping and navigation 91; software development and lifecycle management 92; virtual classroom education delivery 93; data analytics processing 94; transaction processing 95; and RBG-D classifier training processing 96.

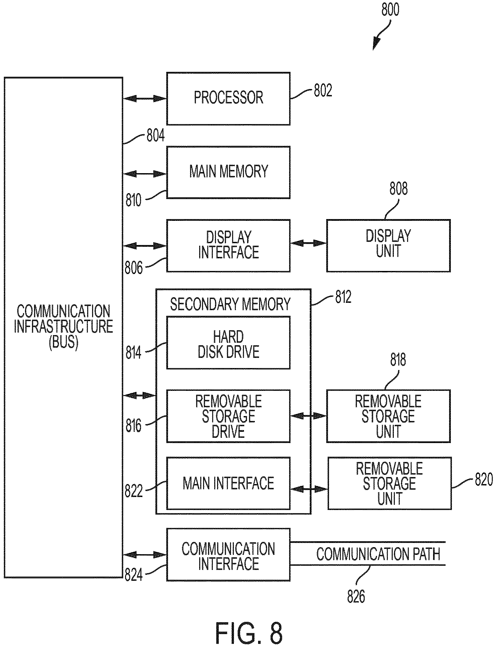

FIG. 8 illustrates a high level block diagram showing an example computer-based system 800 that is useful for implementing one or more embodiments of the invention. Although one exemplary computer system 800 is shown, computer system 800 includes a communication path 826, which connects computer system 800 to additional systems and may include one or more wide area networks (WANs) and/or local area networks (LANs) such as the internet, intranet(s), and/or wireless communication network(s). Computer system 800 and additional system are in communication via communication path 826, (*e.g.,* to communicate data between them).

Computer system 800 includes one or more processors, such as processor 802. Processor 802 is connected to a communication infrastructure 804 (*e.g.,* a communications bus, cross-over bar, or network). Computer system 800 can include a display interface 806 that forwards graphics, text, and other data from communication infrastructure 804 (or from a frame buffer not shown) for display on a display unit 808. Computer system 800 also includes a main memory 810, preferably random access memory (RAM), and may also include a secondary memory 812. Secondary memory 812 may include, for example, a hard disk drive 814 and/or a removable storage drive 816, representing, for example, a floppy disk drive, a magnetic tape drive, or an optical disk drive. Removable storage drive 816 reads from and/or writes to a removable storage unit 818 in a manner well known to those having ordinary skill in the art. Removable storage unit 818 represents, for example, a floppy disk, a compact disc, a magnetic tape, or an optical disk, etc. which is read by and written to by removable storage drive 816. As will be appreciated, removable storage unit 818 includes a computer readable medium having stored therein computer software and/or data.

In some alternative embodiments of the invention, secondary memory 812 may include other similar means for allowing computer programs or other instructions to be loaded into the computer system. Such means may include, for example, a removable storage unit 820 and an interface 822. Examples of such means may include a program package and package interface (such as that found in video game devices), a removable memory chip (such as an EPROM or PROM) and associated socket, and other removable storage units 820 and interfaces 822 which allow software and data to be transferred from the removable storage unit 820 to computer system 800.

Computer system 800 may also include a communications interface 824. Communications interface 824 allows software and data to be transferred between the computer system and external devices. Examples of communications interface 824 may include a modem, a network interface (such as an Ethernet card), a communications port, or a PCM-CIA slot and card, etcetera. Software and data transferred via communications interface 824 are in the form of signals which may be, for example, electronic, electromagnetic, optical, or other signals capable of being received by communications interface 824. These signals are provided to communications interface 824 via communication path (i.e., channel) 826. Communication path 826 carries signals and may be implemented using wire or cable, fiber optics, a phone line, a cellular phone link, an RF link, and/or other communications channels.

In the present disclosure, the terms "computer program medium," "computer usable medium," and "computer readable medium" are used to generally refer to media such as main memory 810 and secondary memory 812, removable storage drive 816, and a hard disk installed in hard disk drive 814. Computer programs (also called computer control logic) are stored in main memory 810, and/or secondary memory 812. Computer programs may also be received via communications interface 824. Such computer programs, when run, enable the computer system to perform the features of the present disclosure as discussed herein. In particular, the computer programs, when run, enable processor 802 to perform the features of the computer system. Accordingly, such computer programs represent controllers of the computer system.

The present invention may be a system, a method, and/or a computer program product at any possible technical detail level of integration. The computer program product may include a computer readable storage medium (or media) having computer readable program instructions thereon for causing a processor to carry out aspects of the present invention.

The computer readable storage medium can be a tangible device that can retain and store instructions for use by an instruction execution device. The computer readable storage medium may be, for example, but is not limited to, an electronic storage device, a magnetic storage device, an optical storage device, an electromagnetic storage device, a semiconductor storage device, or any suitable combination of the foregoing. A non-exhaustive list of more specific examples of the computer readable storage medium includes the following: a portable computer diskette, a hard disk, a random access memory (RAM), a read-only memory (ROM), an erasable programmable read-only memory (EPROM or Flash memory), a static random access memory (SRAM), a portable compact disc read-only memory (CD-ROM), a digital versatile disk (DVD), a memory stick, a floppy disk, a mechanically encoded device such as punch-cards or raised structures in a groove having instructions recorded thereon, and any suitable combination of the foregoing. A computer readable storage medium, as used herein, is not to be construed as being transitory signals per se, such as radio waves or other freely propagating electromagnetic waves, electromagnetic waves propagating through a waveguide, or other transmission media (*e.g.,* light pulses passing through a fiber-optic cable), or electrical signals transmitted through a wire.

Computer readable program instructions described herein can be downloaded to respective computing/processing devices from a computer readable storage medium or to an external computer or external storage device via a network, for example, the Internet, a local area network, a wide area network and/or a wireless network. The network may comprise copper transmission cables, optical transmission fibers, wireless transmission, routers, firewalls, switches, gateway computers and/or edge servers. A network adapter card or network interface in each computing/processing device receives computer readable program instructions from the network and forwards the computer readable program instructions for storage in a computer readable storage medium within the respective computing/processing device.

Computer readable program instructions for carrying out operations of the present invention may be assembler instructions, instruction-set-architecture (ISA) instructions, machine instructions, machine dependent instructions, microcode, firmware instructions, state-setting data, configuration data for integrated circuitry, or either source code or object code written in any combination of one or more programming languages, including an object oriented programming language such as Smalltalk, C++, or the like, and procedural programming languages, such as the "C" programming language or similar programming languages. The computer readable program instructions may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider). In some embodiments of the invention, electronic circuitry including, for example, programmable logic circuitry, field-programmable gate arrays (FPGA), or programmable logic arrays (PLA) may execute the computer readable program instruction by utilizing state information of the computer readable program instructions to personalize the electronic circuitry, in order to perform aspects of the present invention.

Aspects of the present invention are described herein with reference to flowchart illustrations and/or block diagrams of methods, apparatus (systems), and computer program products according to embodiments of the invention. It will be understood that each block of the flowchart illustrations and/or block diagrams, and combinations of blocks in the flowchart illustrations and/or block diagrams, can be implemented by computer readable program instructions.

These computer readable program instructions may be provided to a processor of a general purpose computer, special purpose computer, or other programmable data processing apparatus to produce a machine, such that the instructions, which execute via the processor of the computer or other programmable data processing apparatus, create means for implementing the functions/acts specified in the flowchart and/or block diagram block or blocks. These computer readable program instructions may also be stored in a computer readable storage medium that can direct a computer, a programmable data processing apparatus, and/or other devices to function in a particular manner, such that the computer readable storage medium having instructions stored therein comprises an article of manufacture including instructions which implement aspects of the function/act specified in the flowchart and/or block diagram block or blocks.

The computer readable program instructions may also be loaded onto a computer, other programmable data processing apparatus, or other device to cause a series of operational steps to be performed on the computer, other programmable apparatus or other device to produce a computer implemented process, such that the instructions which execute on the computer, other programmable apparatus, or other device implement the functions/acts specified in the flowchart and/or block diagram block or blocks.

The flowchart and block diagrams in the Figures illustrate the architecture, functionality, and operation of possible implementations of systems, methods, and computer program products according to various embodiments of the present invention. In this regard, each block in the flowchart or block diagrams may represent a module, segment, or portion of instructions, which comprises one or more executable instructions for implementing the specified logical function(s). In some alternative implementations, the functions noted in the blocks may occur out of the order noted in the Figures. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts or carry out combinations of special purpose hardware and computer instructions.

The descriptions of the various embodiments of the present invention have been presented for purposes of illustration, but are not intended to be exhaustive or limited to the embodiments disclosed. Many modifications and variations will be apparent to those of ordinary skill in the art without departing from the scope and spirit of the described embodiments. The terminology used herein was chosen to best explain the principles of the embodiments, the practical application or technical improvement over technologies found in the marketplace, or to enable others of ordinary skill in the art to understand the embodiments described herein.

## Claims

1. A computer-implemented method for training an RGB-D classifier for a scene classification task, the method comprising:
receiving, by a system comprising one or more processors, task-relevant labeled depth data, task-irrelevant RGB-D data, and a given trained representation in RGB, wherein the task-relevant labeled depth data includes a plurality of task-relevant depth images, wherein the task-irrelevant RGB-D data includes a plurality of task-irrelevant RGB-D image pairs, wherein each RGB-D image pair of the task-irrelevant RGB-D data comprises a task-irrelevant RGB image and a task-irrelevant depth image;
simulating, by the system, an RGB representation using only the task-irrelevant RGB-D data; and
building, by the system, a joint neural network using only the task-irrelevant RGB-D data and the task-relevant labeled depth data.

2. The computer-implemented method of claim 1, wherein simulating, by the system, an RGB representation using only the task-irrelevant RGB-D data comprises:
creating a first convolutional neural network to handle depth images of the task-irrelevant RGB-D data;
creating a second convolutional neural network to handle RGB images of the task-irrelevant RGB-D data;
training the first convolution neural network by at least:
fixing the second convolution neural network using the given trained representation in RGB; and
enforcing an L2 loss function on the first and second convolution neural networks.

3. The computer-implemented method according to any of the preceding claims, wherein building, by the system, a joint neural network using only the task-irrelevant RGB-D data and the task-relevant labeled depth data comprises:
creating a third convolution neural network and an RGB classifier to learn from a label of a scene classification of the task-relevant labeled depth data, wherein the third convolution neural network is configured to receive depth images of the task-relevant labeled depth data and to share all weights with the first convolution neural network;
training the second convolution neural network and the RGB classifier such that a weighted sum of a softmax loss and the L2 loss are minimized, wherein the training of the second convolution neural network includes pre-training the third convolution neural network from the first convolution neural network and fixing the second convolution neural network using the given trained representation in RGB.

4. The computer-implemented method according to any of the preceding claims further comprising:
receiving, by the system, task-relevant RGB data, wherein the task-relevant RGB data includes a plurality of task-relevant RGB images;
testing, by the system, the task-relevant RGB data by forming a scene classifier in RGB/depth, wherein forming the scene classifier comprises combining the second and third convolution neural networks and the trained RGB classifier.

5. The computer-implemented method according to any of the preceding claims further comprising:
training, by the system, a domain fusion network using only the task-relevant labeled depth data to train a joint classifier for an RGB-D input.

6. The computer-implemented method according to any of the preceding claims, wherein training, by the system, a domain fusion network using only the task-relevant labeled depth data to train a joint classifier for an RGB-D input comprises:
creating a fourth and fifth convolution neural network, wherein the fourth and fifth convolution neural network handle depth images of the task-relevant labeled depth data;
adding a concatenation layer to the fourth and fifth convolution network, wherein the concatenation layer is configured to generate a concatenated representation by concatenating output representations of the fourth and five convolution networks, wherein the concatenated representation is connected to the joint classifier; and
training the fourth convolution neural network to learn a depth representation for RGB-D scene classification without constraint of the L2 loss by at least:
pre-training the fourth from the third convolutional neural network;
pre-training the fifth convolution neural network from the first convolution neural network;
fixing the fifth convolution neural network based at least in part on the simulated RGB representation; and
enforcing the softmax loss on the joint classifier.

7. The computer-implemented method according to any of the preceding claims further comprising:
receiving, by the system, task-relevant RGB-D data, wherein the task-relevant RGB-D data includes a plurality of task-relevant RGB-D image pairs, wherein each RGB-D image pair of the task-relevant RGB-D data comprises a task-relevant RGB image and a task-relevant depth image; and
testing the task-relevant RGB-D data by forming an RGB-D scene classifier, wherein the testing of the task-relevant RGB-D data includes replacing the fifth convolution neural network with the second convolution neural network.

8. A computer program product for training an RGB-D classifier for a scene classification task, the computer program product comprising a computer readable storage medium having program instructions embodied therewith, wherein the computer readable storage medium is not a transitory signal per se, the program instructions executable by a system comprising one or more processors, to cause the system to perform a method according to any of the claims 1 to 7.

9. A system for training an RGB-D classifier for a scene classification task, the system comprising one or more processors configured to perform a method according to any of the claims 1 to 7.
